# EUROPEAN PATENT APPLICATION

(11) **EP 2 778 858 A1**
(43) Date of publication of application: **17.09.2014**
(21) Application number: 13159244.6
(22) Date of filing: 14.03.2013
(51) Int. Cl.: G06F 3/023, G06F 3/044, G06F 3/0488

(54) **Electronic device including touch-sensitive keyboard and method of controlling same**

(71) Applicant: BlackBerry Limited, Waterloo, ON N2K 0A7 (CA)
(72) Inventor: Burrell, Douglas James Arthur, Ontario, N2L3W8 (CA)
(74) Representative: Fennell, Gareth Charles

(57) **Abstract**

An electronic device includes a keyboard comprising a plurality of mechanical keys, a plurality of touch sensors interspersed among the plurality of mechanical keys to detect touches on the mechanical keys, and a controller coupled to the touch sensors and configured to group touch sensor data in a first set of groups to identify a first coordinate value of a touch location on the keyboard and to group the touch sensor data in a second set of groups to identify a second coordinate value of the touch location. The first set of groups differs from the second set of groups.

## Description

### Field of Technology

The present disclosure relates to electronic devices, including but not limited to, portable electronic devices having touch-sensitive displays and their control.

### Background

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart phones, wireless personal digital assistants (PDAs), and laptop computers with wireless 802.11 or Bluetooth® capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size. Improvements in devices with touch-sensitive displays are desirable.

### Summary

An electronic device includes a keyboard comprising a plurality of mechanical keys, a plurality of touch sensors interspersed among the plurality of mechanical keys to detect touches on the mechanical keys, and a controller coupled to the touch sensors and configured to group touch sensor data in a first set of groups to identify a first coordinate value of a touch location on the keyboard and to group the touch sensor data in a second set of groups to identify a second coordinate value of the touch location. The first set of groups differs from the second set of groups. A method includes detecting a touch on a keyboard by grouping touch sensor data from touch sensors interspersed among keys of the keyboard into a first set of groups to identify a first coordinate value of a touch location and grouping the touch sensor data into a second set of groups to identify a second coordinate value of the touch location. The first set of groups differs from the second set of groups.

### Brief Description of the Drawings

FIG. 1 is a block diagram of a portable electronic device in accordance with the disclosure.

FIG. 2 is a front view of the portable electronic device in accordance with the disclosure.

FIG. 3 is a front view of a keyboard and touch sensors in accordance with the disclosure.

FIG. 4 is a flowchart illustrating a method of detecting touches on a keyboard of an electronic device in accordance with the disclosure.

FIG. 5 and FIG. 6 illustrate examples of touch detection on mechanical keys in accordance with the disclosure.

FIG. 7 is a block diagram of another portable electronic device in accordance with the disclosure.

FIG. 8 is a front view of a keyboard and touch sensors in accordance with the disclosure.

### Detailed Description

The following describes an electronic device that includes a keyboard. The keyboard includes plurality of mechanical keys and capacitive touch sensors interspersed among the plurality of mechanical keys. The touch sensors are coupled to a controller to detect a touch on the keys. A first coordinate of the touch is identified based on a first group of touch sensor data and a second coordinate of the touch is identified based on a second group of touch sensor data.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device as described herein. Examples of electronic devices include mobile, or handheld, wireless communication devices such as pagers, cellular phones, cellular smart-phones, wireless organizers, personal digital assistants, wirelessly enabled notebook computers, tablet computers, mobile internet devices, electronic navigation devices, and so forth. The electronic device may be a portable electronic device without wireless communication capabilities, such as a handheld electronic game, digital photograph album, digital camera, media player, e-book reader, and so forth.

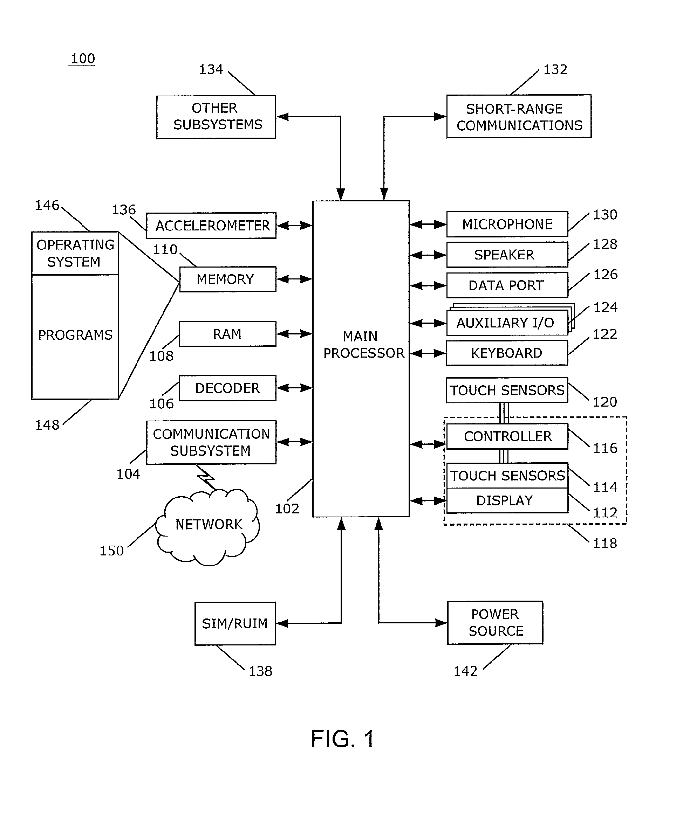

A block diagram of an example of a portable electronic device 100 is shown in FIG. 1. The portable electronic device 100 includes multiple components, such as a processor 102, such as a microprocessor or discrete control circuitry, that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as a Random Access Memory (RAM) 108, memory 110, a touch-sensitive display 118, a keyboard 122, an auxiliary input/output (I/O) subsystem 124, a data port 126, a speaker 128, a microphone 130, short-range communications 132 and other device subsystems 134. Short-range communications include, for example, Bluetooth® communications, near-field communications (NFC), and other short or limited range communications. The touch-sensitive display 118 includes a display 112 and touch sensors 114 that are coupled to a controller 116 that is utilized to interact with the processor 102. Touch sensors 120 are interspersed among keys of the keyboard 122. Input via a graphical user interface may be provided via the touch-sensitive display 118, the touch sensors 120, and the keyboard 122. Information, such as text, characters, symbols, images, icons, and other items that may be displayed or rendered on a portable electronic device, is displayed on the touch-sensitive display 118 via the processor 102. The touch sensors 120 are coupled to the controller 116. Alternatively, the touch sensors 120 may be coupled to a second controller, separate of the touch-sensitive display 118. The touch sensors are utilized to detect touches on mechanical keys of the keyboard 122. Input to the processor 102 may be provided by actuation of at least one key of the keyboard 122 or by the controller 116 when a touch is detected on one or more keys of the keyboard 122. The processor 102 may also interact with an accelerometer 136 that may be utilized to detect direction of gravitational forces or gravity-induced reaction forces.

To identify a subscriber for network access, the portable electronic device 100 may utilize a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs, applications, or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth. A capacitive touch-sensitive display includes one or more capacitive touch sensors 114. The capacitive touch sensors may comprise any suitable material, such as indium tin oxide (ITO).

One or more touches, also known as touch contacts or touch events, may be detected by the touch-sensitive display 118. The processor 102 may determine attributes of the touch, including a location of the touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. A touch may be detected from any suitable input member, such as a finger, thumb, appendage, or other objects, for example, a stylus, pen, or other pointer, depending on the nature of the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 and may begin at an origin point and continue to an end point, for example, a concluding end of the gesture. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at a location that is generally unchanged over a period of time or is associated with the same selection item for a period of time.

The touch-sensitive display 118 includes a display area in which information may be displayed, and a non-display area extending around the periphery of the display area. The display area generally corresponds to the area of the display 112. Information is not displayed in the non-display area by the display, which non-display area is utilized to accommodate, for example, electronic traces or electrical connections, adhesives or other sealants, and/or protective coatings around the edges of the display area. The non-display area may be referred to as an inactive area and is not part of the physical housing or frame of the electronic device. Typically, no pixels of the display are in the non-display area, thus no image can be displayed by the display 112 in the non-display area. Optionally, a secondary display, not part of the primary display 112, may be disposed under the non-display area. Touch sensors may be disposed in the non-display area, which touch sensors may be extended from the touch sensors in the display area or distinct or separate touch sensors from the touch sensors in the display area. A touch, including a gesture, may be associated with the display area, the non-display area, or both areas. The touch sensors may extend across substantially the entire non-display area or may be disposed in only part of the non-display area.

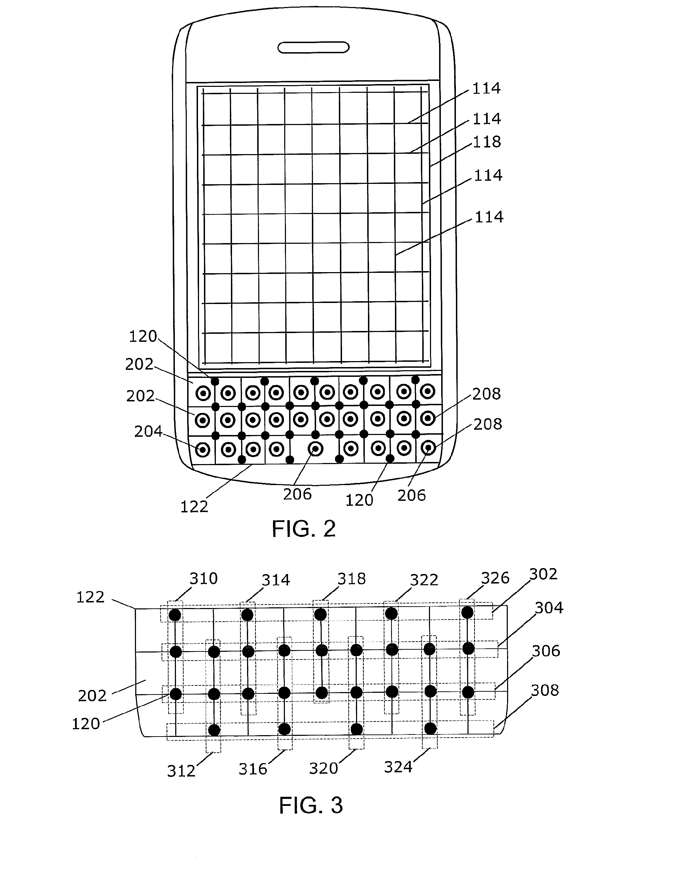

A front view of a portable electronic device 100 is shown in FIG. 2. Two sets of touch sensors 114, also referred to as touch-sensing electrodes, are illustrated in the example of FIG. 2. The touch sensors 114 are shown for the purpose of illustration, but are not visible to the eye when viewing the portable electronic device 100 from the front.

The touch sensors 114 include drive electrodes that extend generally vertically in the view illustrated in FIG. 2. The drive electrodes may be disposed, for example, on a substrate, on a cover, or on any other suitable layer of the touch-sensitive display 118. The touch sensors 114 also include sense electrodes that extend generally horizontally in the view illustrated in FIG. 2. The drive electrodes are spaced from the sense electrodes by an interlayer dielectric, or insulator. Alternatively, the drive electrodes may extend generally horizontally and the sense electrodes may extend generally vertically. The terms "vertically" and "horizontally" are utilized herein to refer to the orientation of the portable electronic device 100 in the figures and are not otherwise limiting.

The drive electrodes and the sense electrodes are coupled to the controller 116 and are utilized, for example, for mutual-capacitance touch sensing. The controller 116 is configured to drive the drive electrodes while sensing changes in signals from the sense electrodes.

The keyboard 122 includes mechanical keys 202. The mechanical keys 202 may include, for example, dome-type switches 204 disposed under key covers, also referred to as key caps. When a key comprising a dome-type switch is depressed, two conductive pads of the key are electrically coupled together to actuate the key. The conductive pads of each key include a central pad 206 and a surrounding or outer ring 208 that are electrically coupled when the key is depressed. In this example, the conductive pads 206, 208 are disposed on a printed circuit board (PCB) under the key cap. The key caps may be any suitable material. For example, the key caps may comprise plastic or rubber.

The touch sensors 120 are interspersed among the mechanical keys 202. The touch sensors 120 may be self-capacitive touch sensors that are disposed, for example, on the PCB under the key caps of the mechanical keys 202. A touch on or near a key cap of a mechanical key 202 alters the current on the capacitive touch sensors 120, 122 that are near the touch. The change in current through the capacitive touch sensors 120, 122 is detected by the touch controller 116. The touch sensors 120 may be disposed on the same layer of the PCB as the pads of the keys, on another layer of the PCB, on an underside of the key caps, on top of or on an outer surface of the key caps, in between the key caps, and so forth. The touch sensors 120 are configured to detect a touch on or near a key cap by detecting changes in signals when a touch occurs on the key cap.

A front view of the keyboard 122 and the touch sensors 120 is illustrated in FIG. 3. The touch sensors 120 are generally aligned in rows and columns. In this example, the touch sensors are aligned in four rows 302, 304, 306, 308 and nine columns 310, 312, 314, 316, 318, 320, 322, 324, 326. The conductive pads 206, 208 of the keys 202 are not shown in FIG. 2 to simplify the drawing.

Each of the touch sensors 120 is coupled to one input of the controller 116. The controller 116 detects touches on the keyboard 122 based on electrical signals or pulses that comprise touch sensor data from the touch sensors 120. The touch sensor data may be grouped by the controller 116. The touch sensor data may be grouped, for example, by receiving separate signals from the individual touch sensors 120 and combining signal values together. In this example, the touch sensor data is separately received from each touch sensor 120 and grouped by the controller 116. The controller may, for example, group signals by identifying a largest or greatest signal value from the signals received from the touch sensors 120 in a group. The largest signal values from the groups of touch sensors 120 may be utilized to determine or calculate a location of the touch. Alternatively, the touch sensor data may be grouped by electrically coupling groups of touch sensors 120 together and receiving signals from groups of touch sensors 120. In this example, one signal is received from a group of electrically coupled touch sensors 120 and the controller 116 is configured to electrically couple the touch sensors 120. The capacitive sensors are separately coupled to the controller 116 and are coupled together, for example, by a multiplexer or mux that dynamically groups the touch sensors 120. The multiplexer or the mux may be controlled by the controller 116 to group the touch sensors 120 or may be part of the controller 116. The controller 116 may control which touch sensors 120 are grouped and when the touch sensors 120 are grouped.

The location of a touch may be identified based on signals from groups of the touch sensors 120. For example, an x component may be determined by grouping touch sensor data based on columns, e.g., data from touch sensors 120 in a column is grouped. In this example, the touch sensor data is grouped in nine groups corresponding to the nine columns 310, 312, 314, 316, 318, 320, 322, 324, 326. The y component may be determined by grouping touch sensor data based on row, e.g., data from touch sensors 120 in a row is grouped. In this example, the touch sensor data is grouped in four groups corresponding to the four rows 302, 304, 306, 308.

The touch sensors 120 may be scanned by receiving signals and utilizing the received signals, also referred to as touch data, from the touch sensors to detect touches. When the touch data is grouped by receiving separate signals from the individual touch sensors 120 and combining signal values together by the controller 116, the touch location may be identified based on raw touch data, calculations performed on touch data received from a single scan of the touch sensors, and so forth. For example, the signal or current values from each of the touch sensors 120 in a group may be compared to identify the highest signal value from a touch sensor 120 of the group. The highest signal value for each group may be determined and the highest signal values may be utilized to determine a center of the touch. When the touch data is grouped by electrically coupling touch sensors 120, the touch location may be identified based on two scans of the touch sensors 120. The touch data may be grouped by grouping touch data from the sensors in the columns 310, 312, 314, 316, 318, 320, 322, 324, 326 in a first scan to identify the x component of a touch. The touch data may be grouped by grouping the touch data from sensors in the rows 302, 304, 306, 308 in a second scan to identify the y component of the touch. Touch sensor data from a touch sensor 120 in one of the columns 310, 312, 314, 316, 318, 320, 322, 324, 326 is grouped with touch sensor data from two other touch sensors 120 in the same column in a scan to identify the x component of a touch location. The touch sensor data from the touch sensor is grouped with touch sensor data from eight other touch sensors in the same row during the scan to identify the y component of the touch location. The touch sensor data from the touch sensor 120 is not grouped with the touch sensor data from the two other touch sensors in the same column in the scan to identify the y component of the touch location.

A touch on the keyboard 122 is detected, and the location of the touch is identified by grouping the touch data to identify components of the touch location. The controller 116 and/or the processor 102 may determine a location of the touch on the keyboard 122.

One or more gestures on the keyboard 122 may also be detected utilizing the capacitive touch sensors 120. A gesture may be identified by attributes of the touch data, including the origin point, the end point, the distance travelled, the duration, the velocity, and the direction, for example. A gesture may be long or short in distance and/or duration. Two points of the gesture may be utilized to determine a direction of part or all of the gesture. A gesture on the keyboard 122 may also include a hover on one or more keys of the keyboard 122.

A gesture that begins on the keyboard 122 and continues to the touch-sensitive display 118 may also be detected. Such a gesture is detected based on signals from the touch sensors 114 of the touch-sensitive display 118 and signals from the touch sensors 120 interspersed with the mechanical keys 202 of the keyboard 122. The gesture may be identified as a single gesture based on the direction, the origin point, and the end point on both the keyboard 122 and the touch-sensitive display 118. A gesture that begins on the touch-sensitive display 118 and continues to the keyboard 122 may also be detected.

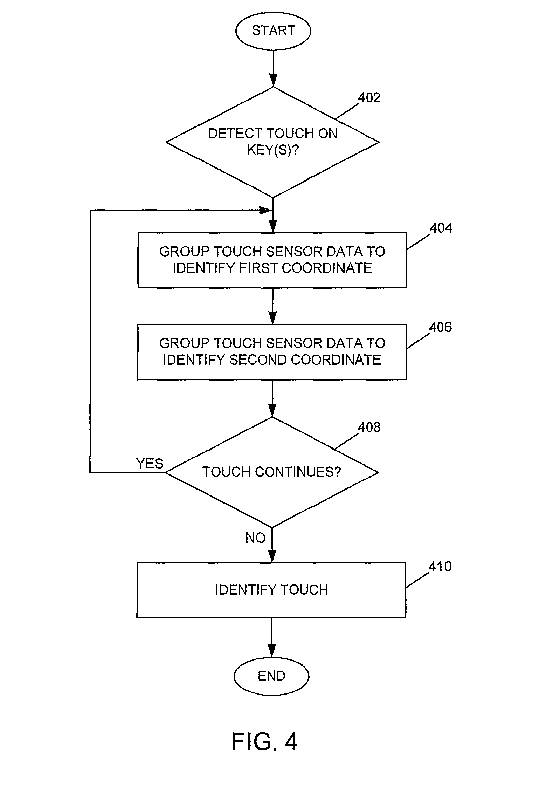

A flowchart illustrating a method of detecting touches on a keyboard of an electronic device is shown in FIG. 4. The method may be carried out by software executed, for example, by the controller 116 and/or the processor 102. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable storage medium device or apparatus, which may be a non-transitory or tangible storage medium.

When a touch on a mechanical key 202 is detected 402, the process continues at 404. A touch is detected by capacitive touch sensing utilizing the touch sensors 120. A touch on a mechanical key 202 need not depress the mechanical key 202.

The location of a touch is identified based on groups of signals from the touch sensors 120 as described above. The touch data from touch sensors 120 is grouped 404 in one set of groups to identify a first component of the touch location. For example, the touch data from touch sensors 120 may be grouped by column 310, 312, 314, 316, 318, 320, 322, 324, 326 of touch sensor 120 in a first scan to identify the x component of a touch. The touch data from touch sensors 120 is grouped 406 in another set of groups to identify a second component of the touch location. For example, the touch sensor data from touch sensors 120 may be grouped by row 302, 304, 306, 308 of touch sensor in a second scan to identify the y component of the touch. When the touch continues 408, the process of grouping the touch sensor data is repeated. When the touch ends 408, the type of touch is identified. The touch is identified 410 based on attributes of the touch. For example, the touch may be identified as a touch that is short in duration, also referred to as a tap, or as a particular gesture, such as a swipe. The attributes of the touch, such as location(s), length, duration, direction, and so forth, may be utilized by the processor 102 to identify the associated function. For example, the touch may identify information such as a selection option displayed on the display 112.

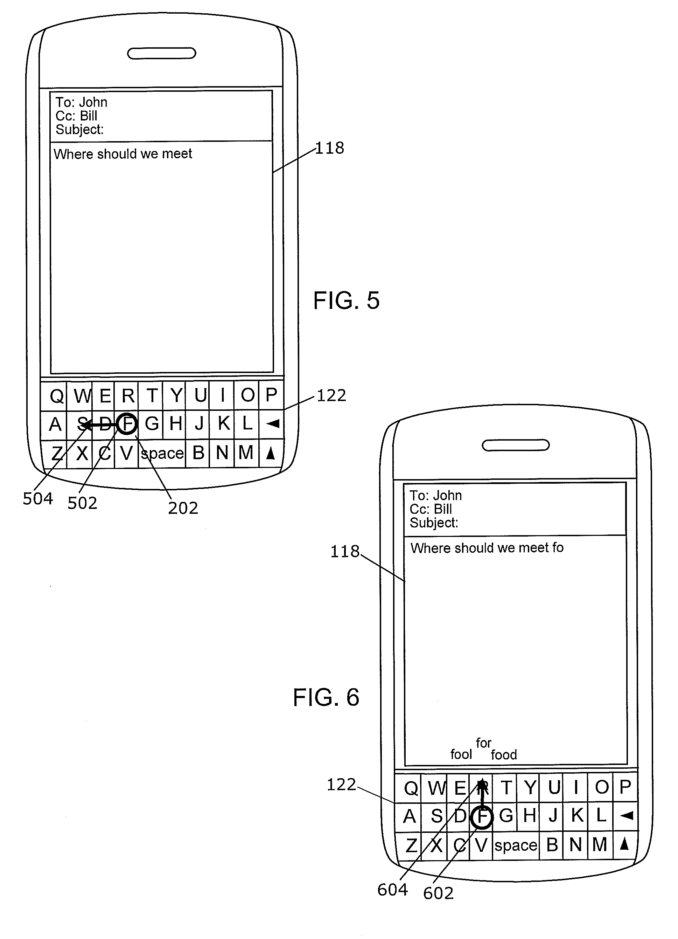

Examples of touch detection on mechanical keys are illustrated in FIG. 5 and FIG. 6. In the example of FIG. 5, a touch, illustrated by the circle 502, is detected on a mechanical key 202 of the keyboard 122. In this example, the location of the touch is associated with the letter F. The touch sensor data is grouped in one set of groups to identify a first component of the touch location and is grouped in one set of groups to identify a second component of the touch location. The touch or gesture continues in the direction of the arrow 504, and the location of the touch is identified a plurality of times during the touch or gesture. When the touch is discontinued, the touch is identified as a gesture from the origin at 502 to the end of the arrow 504. The associated function is determined by the processor to be a cursor movement function to move the cursor to left and a previously entered character is deleted from the data entry field on the touch-sensitive display 118.

In the example of FIG. 6, a touch is first detected at the location illustrated by the circle 602 on the keyboard 122. The touch sensors are grouped in one set of groups to identify a first component of the touch location and are grouped in second set of groups to identify a second component of the touch location. The touch or gesture continues in the direction of the arrow 604, and the location of the touch is identified a plurality of times during the touch or gesture. The touch is identified as a gesture from the origin illustrated by the circle 602 to the end of the arrow at 604. The associated function is determined by the processor to be a selection of the word "for" from a plurality of terms identified utilizing a text prediction method.

In the examples described above, the touch sensor data is grouped based on columns and rows of touch sensors. The touch sensor data may be grouped in other groups. For example, the touch sensor data may be grouped such that data from touch sensors in one row are grouped into two different groups. The touch sensor data from the touch sensors 120 in one row may be grouped into two groups depending on which side of the row the touch sensor is located. Grouping data from touch sensors in each row into two different groups may facilitate detection of touches that overlap in time on two different parts of a row. When two touches occur, one touch on each side of the keyboard, touch locations for both touches may be identified. For example, when a user types with both thumbs, multiple groupings for each row may be advantageous.

The touch sensors 120 may be disposed on any layer of the PCB. For example, the touch sensors 120 and the pads of the mechanical keys may be disposed on different layers of the PCB. The touch sensors 120 may cover a larger area when disposed on a different layer of the PCB than the layer where the mechanical key pads are disposed, without interfering with mechanical operation of the keys of the keyboard. The touch sensors may be larger when disposed on a different layer of the PCB than the layer of the PCB where the pads of the mechanical keys are disposed. Larger touch sensors facilitates increased sensitivity of the touch sensors 120 to touches on the keys and improves touch and gesture detection accuracy. Other components, such as backlighting components, may be located on the PCB. These components may be appropriately located to inhibit interference with touch sensing by the touch sensors 120 and without mechanically interfering with the mechanical keys.

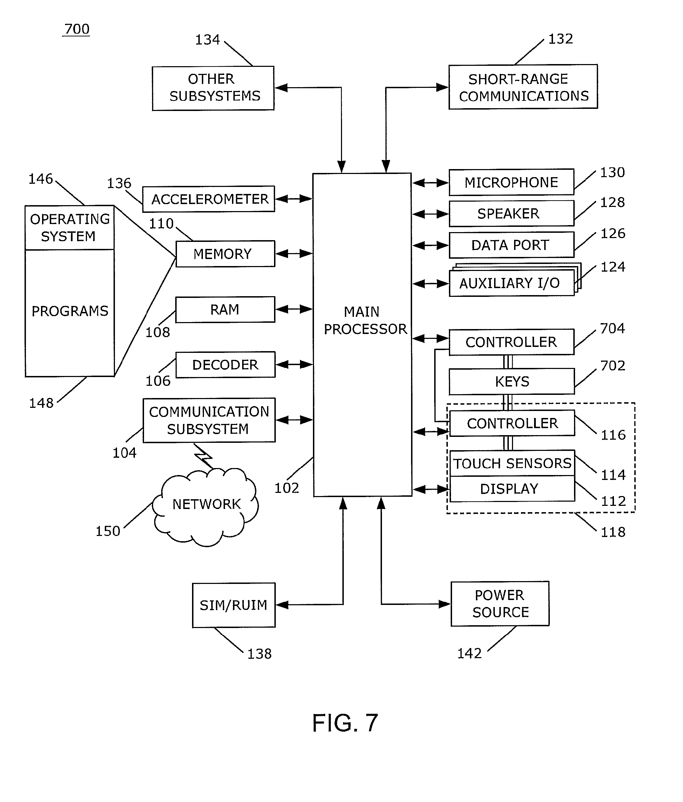

A block diagram of another example of a portable electronic device 700 is shown in FIG. 7. The portable electronic device 700 includes multiple components, such as a processor 102 that controls the overall operation of the portable electronic device 700. Many of the components are similar to those described with reference to the example electronic device 100 of FIG. 1. The keys 702 of the keyboard are coupled to the keyboard controller 704 that detects actuation of the keys 702. In this example, the keys 702 are also coupled to the touch controller 116 to detect touches on the keys 702. The keyboard controller 704 is coupled to the touch controller 116 to facilitate communication between the keyboard controller 704 and the touch controller 116 to control key actuation detection and keyboard touch detection.

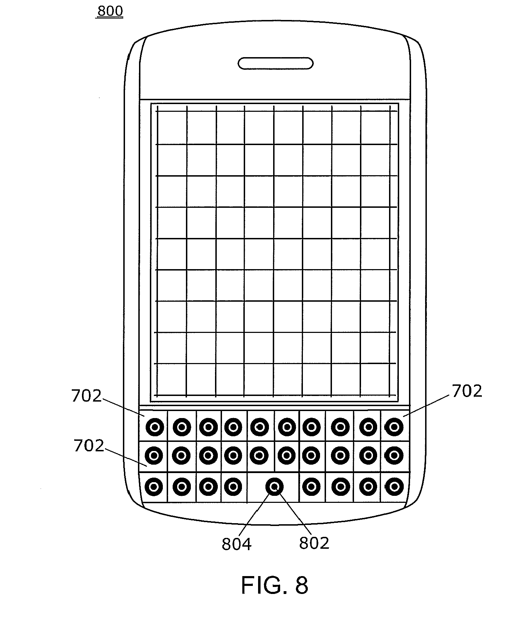

A front view of the portable electronic device 800 is shown in FIG. 8. The keys 702 of the keyboard may include, for example, dome-type switches disposed under key caps. When a key comprising a dome-type switch is depressed, two conductive pads of the key 702, that are disposed on a printed circuit board (PCB) under the key cap, are electrically coupled together to actuate the key 702. The conductive pads of each key include a central pad 802 and a surrounding or outer ring 804. The central pads 802 and the rings 804 are coupled to the keyboard controller 704, that is coupled to the processor 102, to detect electrical coupling of the central pad 802 and the surrounding ring 804 when the key 702 is actuated.

The rings 804 of the keys 702 are also coupled to the touch controller 116. The rings 804 may be utilized as self-capacitive touch sensors to detect touches on the keys 702 based on touch-sensing signals from the rings 804. The touch controller 116 is coupled to the keyboard controller 704 to coordinate the timing of key actuation detection and touch detection. The touch controller 116 may be configured to electrically couple and decouple the rings 804 from, for example, internal capacitive touch sensing circuitry in the touch controller 116. The rings 804 may be decoupled from the capacitive touch sensing circuitry during key actuation detection to reduce interference during key actuation detection. The keyboard controller 704 may control electrical coupling and decoupling of the rings 804 to the processor 102 of the portable electronic device 100. The rings 804 may be electrically decoupled from the processor 102 during touch detection to reduce the interference during touch detection. Alternatively, a switch or multiplexer or mux may be utilized to switch between coupling the rings 804 to the touch controller 116 and coupling the rings 804 to the keyboard controller 704. Alternatively, a single controller may be utilized for key actuation detection and touch detection and may coordinate timing of detection key actuation and detecting touches on the keys.

Touch sensor data from the rings 804 may be grouped into two or more groups, based on row and column of the rings 804, to identify the two components of the touch location, such as described with reference to FIG. 4.

A method includes detecting a touch on a keyboard comprising a plurality of mechanical keys and a plurality of touch sensors interspersed among the plurality of mechanical keys by grouping touch sensor data from rows of touch sensors interspersed among keys of the keyboard into a first set of groups to identify a first coordinate value of a touch location, and grouping the touch sensor data from columns of the touch sensors into a second set of groups to identify a second coordinate value of the touch location. The first set of groups differs from the second set of groups. The method also includes repeating detecting the touch to identify a plurality of touch locations, including the touch location, and, based on the plurality of touch locations, identifying a gesture on the keys of the keyboard.

An electronic device includes a keyboard comprising at least one mechanical key comprising a first conductive pad and a second conductive pad, and at least one controller coupled to the first conductive pad and to the second conductive pad and configured to detect actuation of the mechanical key when the first conductive pad is electrically coupled to the second conductive pad, and detect a touch on the mechanical key based on touch-sensing signals from at least one of the first conductive pad and the second conductive pad that is utilized as a touch sensor during touch detection. The at least one controller is configured to coordinate timing of detecting actuation of the mechanical key and detecting the touch.

Utilizing touch sensors that are interspersed among the keys, touches on the keys are detected. Touch sensor data is grouped to increase signal strength and accuracy in determining the touch location. The touch data is grouped into a one group to identify a component of the touch location, and grouped into another, different group to identify another component of the touch location.

The present disclosure may be embodied in other specific forms without departing from its spirit or essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An electronic device comprising:
a keyboard comprising a plurality of mechanical keys;
a plurality of touch sensors interspersed among the plurality of mechanical keys to detect touches on the mechanical keys;
a controller coupled to the touch sensors and configured to group touch sensor data in a first set of groups to identify a first coordinate value of a touch location on the keyboard and to group the touch sensor data in a second set of groups to identify a second coordinate value of the touch location;
wherein the first set of groups differs from the second set of groups.

2. The electronic device according to claim 1, wherein the controller groups the touch sensor data by measuring capacitance values at the touch sensors and combining the values into the first set of groups to identify the first coordinate value and combining the values into the second set of groups to identify the second coordinate.

3. The electronic device according to claim 1, wherein the controller groups the touch sensor data by electrically coupling the touch sensors in the first set of groups in a first scan and electrically coupling the touch sensors in the second set of groups in a second scan.

4. The electronic device according to claim 3, wherein a first touch sensor and a second touch sensor of the plurality of touch sensors are electrically coupled in the first scan and are not electrically coupled in the second scan.

5. The electronic device according to claim 1, wherein the touch sensor data is grouped based on locations of associated touch sensors.

6. The electronic device according to claim 1, wherein the touch sensor data is grouped such that data from rows of the touch sensors is grouped in the first set of groups and data from columns of the touch sensors is grouped in the second set of groups.

7. The electronic device according to claim 1, wherein the touch sensor data is grouped such that data from the touch sensors is grouped based on row and based on part of the keyboard in which the sensors are located such that the touch sensor data from the touch sensors in a first row is grouped into at least two groups.

8. The electronic device according to claim 1, wherein the touch sensor data is grouped by electrically coupling touch sensors together by the touch controller.

9. A method comprising:
detecting a touch on a keyboard by:
grouping touch sensor data from touch sensors interspersed among keys of the keyboard into a first set of groups to identify a first coordinate value of a touch location;
grouping the touch sensor data into a second set of groups to identify a second coordinate value of the touch location;
wherein the first set of groups differs from the second set of groups.

10. The method according to claim 9, wherein grouping the touch sensor data comprises measuring capacitance values at the touch sensors and combining the values.

11. The method according to claim 9, wherein grouping the touch sensor data into the first set of groups comprises electrically coupling the touch sensors associated with the touch sensor data in the first set of groups in a first scan, and grouping the touch sensor data into the second set of groups comprises electrically coupling the touch sensors associated with the touch sensor data in the second set of groups in a second scan.

12. The method according to claim 11, wherein a first touch sensor and a second touch sensor of the plurality of touch sensors are electrically coupled in the first scan and are not electrically coupled in the second scan.

13. The method according to claim 9, wherein the touch sensor data is grouped based on locations of associated touch sensors.

14. The method according to claim 9, wherein the touch sensor data is grouped such that data from rows of the touch sensors is grouped in the first set of groups and data from columns of the touch sensors is grouped in the second set of groups.

15. A computer-readable storage device having computer-readable code stored thereon, the computer-readable code executable by at least one processor of the electronic device to perform the method of claim 9.
